# EUROPÄISCHE PATENTANMELDUNG

(11) **EP 1 060 950 A2**
(43) Veröffentlichungstag der Anmeldung: **20.12.2000**
(21) Anmeldenummer: 00109675.9
(22) Anmeldetag: 06.05.2000
(51) Int. Cl.: B60Q 1/46, B60Q 1/52

(54) **Verfahren zur selbsttätigen Schaltung von Signaleinrichtungen an einem Kraftfahrzeug**

(30) Priorität: 15.06.1999 DE 19927183
(71) Anmelder: DaimlerChrysler AG, 70567 Stuttgart (DE)
(72) Erfinder: Bullinger, Wilfred, 70825 Korntal-Münchingen (DE); Burghoff, Heinz-Georg, Dr., 73262 Reichenbach (DE); Eberle, Walter, 73269 Hochdorf (DE); Franke, Gerhard, 71554 Weissach (DE); Stahl, Wolfgang, 72644 Oberboihingen (DE); Stiegler, Roland, 73732 Esslingen (DE)

(57) **Zusammenfassung**

Die vorliegende Erfindung betrifft ein Verfahren zur selbsttätigen Schaltung von Signaleinrichtungen an einem Kraftfahrzeug, wobei bei stehendem bzw. sich mit einer Geschwindigkeit kleiner als eine Mindestgeschwindigkeit fortbewegenden Kraftfahrzeug zumindest abhängig von einer Ortsbestimmung des Kraftfahrzeugs eine selbsttätige Einschaltung wenigstens einer Signaleinrichtung erfolgt. Weiterhin kann eine selbsttätige Einschaltung erfolgen, wenn erkannt wird, daß sich das Kraftfahrzeug im Bereich einer Haltestelle eines öffentlichen Verkehrsmittels befindet oder auch bei einem eingelegten Rückwärtsgang.

## Beschreibung

Die vorliegende Erfindung betrifft ein Verfahren zur selbsttätigen Schaltung von Signaleinrichtungen an einem Kraftfahrzeug entsprechend dem Oberbegriff der Patentansprüche 1, 10, 14, 15 und 17.

Es ist bereits ein Verfahren zur selbsttätigen Schaltung von Signaleinrichtung an einem Kraftfahrzeug bekannt (Deutsches Gebrauchsmuster DE 295 04 002 U1). Dabei soll insbesondere die Warnblinkanlage eines Kraftfahrzeugs selbsttätig eingeschaltet werden, wenn kritische Situationen erkannt werden. Dies soll nach diesem Stand der Technik abgeleitet werden, wenn das Kraftfahrzeug stark abbremst, was durch ein besonders starkes Auslenken des Bremspedals erkannt werden soll.

Mit der vorliegenden Erfindung soll die selbsttätige Schaltung von Signaleinrichtungen eines Kraftfahrzeugs verbessert werden.

Dies wird zum einen erfindungsgemäß nach Anspruch 1 gelöst, indem bei stehendem bzw. sich mit einer Geschwindigkeit kleiner als eine Mindestgeschwindigkeit fortbewegenden Kraftfahrzeug zumindest abhängig von einer Ortsbestimmung des Kraftfahrzeugs eine selbsttätige Einschaltung wenigstens einer Signaleinrichtung erfolgt.

Die Signaleinrichrung kann beispielsweise die Warnblinkanlage sein. Ebenso ist es auch möglich, andere Signalquellen des Kraftfahrzeugs anzusteuern. Dadurch kann eine Signalisierung realisiert werden, auch wenn die Warnblinkanlage defekt ist. Die anderen Signalquellen können die Lichter des Kraftfahrzeugs sein, die in diesem Fall beispielsweise auch blinkend angesteuert werden können.

Allein das Kriterium, daß das Kraftfahrzeug langsam fährt oder steht hat sich als nicht hinreichend erwiesen, um sicher ableiten zu können, daß ein Defekt des Kraftfahrzeugs vorliegt und daß deswegen sinnvollerweise die Warnblinkanlage selbsttätig eingeschaltet werden sollte, weil der Fahrzeugführer dies eventuell vergessen hat. Beispielsweise kommt es im Stadtverkehr häufiger zu einem stop-and-go Verkehr, wobei dann immer bei einem Anhalten des Kraftfahrzeugs die Warnblinkanlage selbsttätig eingeschaltet würde. Tatsächlich ist aber die Einschaltung in einer solchen Situation nicht notwendig, so daß es Probleme bei der Akzeptanz eines derartigen Systems geben würde, wenn der Fahrzeugführer übermäßig häufig von Hand die Warnblinkanlage ausschalten müßte.

Vorteilhaft kann daher durch die Ortsbestimmung des Kraftfahrzeugs die selbsttätige Einschaltung der Signaleinrichtung verbessert werden. Durch die Ortsbestimmung kann beispielsweise vorteilhaft unterschieden werden, ob sich das Kraftfahrzeug innerorts befindet, wobei unter den beschriebenen Bedingungen des Stillstands des Kraftfahrzeugs bzw. der Langsamfahrt dann keine selbsttätige Einschaltung der Signaleinrichtung erfolgt, oder ob sich das Kraftfahrzeug außerhalb einer geschlossenen Ortschaft befindet, so daß unter den beschriebenen Bedingungen des Stillstands des Kraftfahrzeugs bzw. der Langsamfahrt dann eine selbsttätige Einschaltung der Signaleinrichtung erfolgt.

Bei einem Stillstand kann es sich beispielsweise um einen Defekt des Kraftfahrzeugs handeln, der durch eine Panne oder auch durch einen Unfall bedingt sein kann. Ebenso ist es möglich, daß der Fahrzeugführer angehalten hat, um sich beispielsweise auf einer Karte zu orientieren. Vorteilhaft wird dann durch das selbsttätige Einschalten der Signaleinrichtung der übrige Verkehr auf das Hindernis aufmerksam gemacht. Eine Langsamfahrt kann beispielsweise auf einen Defekt des Kraftfahrzeugs zurückgeführt werden. In diesem Fall wird vorteilhaft auch der übrige Verkehr durch das selbsttätige Einschalten der Signaleinrichtung gewarnt.

Die Ortsbestimmung kann beispielsweise mittels eines GPS erfolgen. Derartige Systeme werden bereits in Fahrzeugen eingesetzt zur Realisierung eines Navigationssystems oder im Zusammenhang mit Diebstahlschutzanlagen. Vorteilhaft erweist sich dabei bei einem mit einem Navigationssystem ausgestatteten Kraftfahrzeug, daß mit der Ortsbestimmung auch gleichzeitig ausgewertet werden kann, ob sich das Kraftfahrzeug innerhalb einer geschlossenen Ortschaft oder außerhalb einer geschlossenen Ortschaft befindet. In ein solches System ist neben der Ortsbestimmung nach Längen und Breitengraden auch eine digitale Straßenkarte integriert, so daß der Ortsbestimmung unmittelbar auch ein Punkt auf der digitalen Straßenkarte zugeordnet werden kann mit den damit verbundenen weiteren Informationen bzgl. der gerade befahrenen Straße (Autobahn, Bundesstraße, Landstraße, Fahrt innerhalb oder außerhalb geschlossener Ortschaften. ...). Ebenso können in ein solches System auch Fahrzeugsensordaten integriert sein, um die Ortsbestimmung noch zu verbessern. Eine relevante Größen, die mittels eines Sensors erfaßt werden kann, kann beispielsweise die Fahrzeuggeschwindigkeit sein.

Gegebenenfalls ist es möglich, den Wert der Mindestgeschwindigkeit anzupassen abhängig davon, auf welcher Straße sich das Kraftfahrzeug befindet. Beispielsweise kann also der Wert der Mindestgeschwindigkeit auf einer Autobahn größer gewählt werden als auf einer Landstraße.

Bei dem Verfahren nach Anspruch 2 erfolgt die selbsttätige Einschaltung, wenn sich aufgrund der Ortsbestimmung ergibt, daß sich das Kraftfahrzeug auf einer Autobahn befindet.

Dabei kann vergleichsweise sicher abgeleitet werden, daß bei einem Stillstand des Kraftfahrzeugs (beispielsweise in einem Stau) oder bei einer Langsamfahrt (die für eine Autobahn untypisch ist) die Signaleinrichtung eingeschaltet werden soll. Ob sich das Kraftfahrzeug auf einer Autobahn befindet, kann beispielsweise wieder anhand eines Navigationssytems mit digitaler Straßenkarte abgeleitet werden.

Bei der Ortsbestimmung kann generell die aktuell vorliegende Straßenführung berücksichtigt werden. Wenn beispielsweise aufgrund der Ortsbestimmung mittels des GPS und des Navigationssystems mit digitaler Straßenkarte abgeleitet wird, daß sich das Kraftfahrzeug auf einer Autobahn oder auf einer 4- oder mehrspurigen Bundesstraße befindet, kann beispielsweise mittels einer Fahrspurerkennung abgeleitet werden, ob sich das Fahrzeug beispielsweise auf einer Ausfahrtspur zu einer Raststätte, auf einer Ausfahrtspur zum Verlassen der Autobahn oder - bei Autobahnkreuzen - zum Wechsel der Autobahn befindet. Auf diesen Ausfahrtspuren ist die übliche Fahrgeschwindigkeit deutlich geringer als auf der Autobahn selbst, so daß also auch bei einer geringeren Geschwindigkeit noch keine Veranlassung besteht, die Warnblinkanlage zu aktivieren. Eine derartige Fahrspurerkennung ist beispielsweise möglich mit dem in der DE 195 07 957 C1 beschriebenen Verfahren. Die Erkennung der Ausfahrtspur erfolgt also durch eine Erkennung breiterer Linien. Damit ist es beispielsweise auch möglich, Kreuzungen außerhalb geschlossener Ortschaften zu erkennen. Weiterhin kann auch mittels einer Erkennung von Fahrspuren und deren Begrenzung eine Baustelle erkannt werden. Es ist also möglich, die Mindestgeschwindigkeit neben der Anpassung an eine reine Ortsbestimmung noch zusätzlich an Bedingungen anzupassen, die sich aufgrund der momentanen Verkehrssituation ergeben. Außer der Fahrspur kann beispielsweise auch der Fahrbahnrand erkannt und entsprechend bei der Auswertung berücksichtigt werden.

Bei dem Verfahren nach Anspruch 3 erfolgt eine selbsttätige Einschaltung, wenn sich aufgrund der Ortsbestimmung ergibt, daß sich das Kraftfahrzeug außerhalb einer geschlossenen Ortschaft befindet.

Bei der Ausgestaltung des Verfahrens nach Anspruch 4 erfolgt eine selbsttätige Einschaltung nur dann, wenn sich aufgrund der Ortsbestimmung ergibt, daß sich das Kraftfahrzeug auf einer 4- oder mehrspurigen Straße befindet.

Vorteilhaft erfolgt bei dieser Ausgestaltung eine selbsttätige Einschaltung der Signaleinrichtung nur dann, wenn sich das Kraftfahrzeug als mögliches Hindernis auf einer Straße befindet, von der zu erwarten ist, daß sie vergleichsweise stark befahren ist, bzw. bei der aufgrund üblicherweise dort gefahrener Geschwindigkeiten ein Risikopotential vorhanden ist bei einem stehenden Fahrzeug.

Bei der Ausgestaltung des Verfahrens nach Anspruch 5 erfolgt eine selbsttätige Einschaltung nur dann, wenn sich aufgrund der Ortsbestimmung ergibt, daß sich das Kraftfahrzeug nicht im Bereich einer Kreuzung befindet.

Im Bereich einer Kreuzung kann es aufgrund der Verkehrssituation häufiger vorkommen, daß ein Kraftfahrzeug anhalten muß, um vorfahrtberechtigte andere Kraftfahrzeuge vorbei zu lassen. In diesem Fall ist das Kraftfahrzeug kein Hindernis im eigentlichen Sinne, so daß dann vorteilhaft keine selbsttätige Einschaltung der Signaleinrichtung erfolgt.

Bei dem Verfahren nach Anspruch 6 erfolgt eine selbsttätige Einschaltung, wenn erkannt wird, daß sich das Kraftfahrzeug im Bereich einer Haltestelle eines öffentlichen Verkehrsmittels befindet.

Dabei kann das Kraftfahrzeug selbst das öffentliche Verkehrsmittel sein. Ebenso erweist sich dies als vorteilhaft, wenn das Kraftfahrzeug ein anderes Kraftfahrzeug ist, das im Bereich der Haltestelle stehen bleibt, um Passagieren des öffentlichen Verkehrsmittels das Überqueren der Straße zu ermöglichen. Der Aufenthalt des Kraftfahrzeugs im Bereich der Haltestelle kann beispielsweise mittels eines Navigationssystems erkannt werden. Ebenso kann auch eine Sende-/Empfangsvorrichtung vorhanden sein, bei der von der Haltestelle ein Signal ausgesendet wird, das von dem Kraftfahrzeug empfangen werden kann. In diesem Fall kann also der Bereich der Haltestelle unmittelbar erkannt werden, wenn das Signal der Haltestelle empfangbar ist. Wenn das Kraftfahrzeug das öffentliche Verkehrsmittel selbst ist, kann die selbsttätige Einschaltung der Signaleinrichtung daran gekoppelt sein, daß die Türen des Verkehrsmittel geöffnet bzw. freigegeben werden.

Bei dem Verfahren nach Anspruch 7 erfolgt eine selbsttätige Einschaltung, wenn erkannt wird, daß das Kraftfahrzeug auf einer Standspur fährt oder steht.

Wenn das Kraftfahrzeug auf einer Standspur fährt oder steht, kann geschlossen werden, daß das Kraftfahrzeug einen Defekt aufweist. Da es sich gemäß Anspruch 1 um eine Fahrt mit vergleichsweise langsamer Geschwindigkeit handelt, handelt es sich also bei dem Kraftfahrzeug um ein Hindernis, so daß die selbsttätige Einschaltung der Signaleinrichtung zweckmäßig ist. Es kann beispielsweise mittels einer Fahrspurerkennung erkannt werden, ob das Fahrzeug auf einer Standspur fährt oder steht. Eine derartige Vorgehensweise ist beispielsweise beschrieben in der DE 195 07 957 C1.

Bei der Ausgestaltung des Verfahrens nach Anspruch 8 erfolgt eine selbsttätige Einschaltung bzw. ein fortdauernder Betrieb nach einer erfolgten selbsttätigen Einschaltung nur dann, wenn keines der folgenden Kriterien erkannt wurde:
- die Zündung wurde abgestellt,
- der Zündschlüssel wurde aus dem Zündschloß abgezogen und/oder
- das Kraftfahrzeug wurde von außen verriegelt.

Anhand dieser Kriterien läßt sich vorteilhaft ableiten, daß das Kraftfahrzeug gewollt abgestellt wurde. Dies kann beispielsweise auf einem Waldparkplatz erfolgen. Vorteilhaft erfolgt dann keine selbsttätige Einschaltung der Signaleinrichtung bzw. eine Abschaltung der Signaleinrichtung soweit eine selbsttätige Einschaltung bereits erfolgt ist. Es bleibt dem Fahrzeugführer dabei unbenommen, die Signaleinrichtung manuell einzuschalten.

Bei dem Verfahren nach Anspruch 9 erfolgt eine selbsttätige Einschaltung, wenn der Rückwärtsgang eingelegt wird.

Eine andere erfindungsgemäße Lösung betrifft das Verfahren nach Anspruch 10, wonach eine selbsttätige Einschaltung wenigstens einer Signaleinrichtung zumindest abhängig davon erfolgt, daß erkannt wird, daß sich ein Kraftfahrzeug annähert, aufgrund dessen Fahrweise geschlossen wird, daß es zu einer Kollision kommen kann.

Dazu kann das Kraftfahrzeug beispielsweise mittels Sensoren ausgestattet sein, die in der Lage sind, die Umgebung des Kraftfahrzeugs zu erfassen, wie dies beispielsweise im Zusammenhang mit Radarsensoren bekannt ist. Damit lassen sich beispielsweise Relativgeschwindigkeiten und/oder der Abstand zwischen dem eigenen Kraftfahrzeug und dem nachfolgenden Verkehr erfassen. Anstelle von Radarsensoren können auch IR-Sensoren, Ultraschallsensoren oder eine Bildverarbeitung Verwendung finden.

Bei dem Verfahren nach Anspruch 11 ist ein Kriterium zur Beurteilung der Fahrweise des sich annähernden Kraftfahrzeugs dessen Verzögerung, die relative Verzögerung zwischen den Fahrzeugen und/oder deren Relativgeschwindigkeit.

Vorteilhaft kann dabei ausgewertet werden, ob aufgrund der Verzögerung erwartet werden kann, daß das andere Kraftfahrzeug noch sicher zum Stehen kommt oder ob sich das andere Kraftfahrzeug eventuell ohne oder zumindest nicht mit einer hinreichenden Verzögerung annähert, um eine Kollision zu vermeiden.

Bei der Ausgestaltung des Verfahrens nach Anspruch 12 erfolgt eine selbsttätige Einschaltung der wenigstens einen Signaleinrichtung nur dann, wenn das eigene Kraftfahrzeug bremst oder verzögert, was beispielsweise durch das Gaswegnehmen erkannt werden kann.

Vorteilhaft kann dadurch ein weiteres Kriterium gebildet werden, um abzuleiten, ob eine Kollision mit einem sich annähernden anderen Kraftfahrzeug zu befürchten ist. Wenn das eigene Kraftfahrzeug nicht bremst, kann beispielsweise eine Verkehrssituation vorliegen, bei der sich ein leichterer Stau gerade auflöst, so daß absehbar ist, daß das eigene Kraftfahrzeug beschleunigt.

Bei dem Verfahren nach Anspruch 13 erfolgt eine selbsttätige Einschaltung der wenigstens einen Signaleinrichtung nur dann, wenn das eigene Kraftfahrzeug mit einer Sollverzögerung oberhalb eines bestimmten Schwellwertes bremst.

Dadurch kann wiederum vorteilhaft ein Kriterium gebildet werden, mit dem abgeleitet werden kann, ob eine Kollision zu befürchten ist.

Bei dem Verfahren nach Anspruch 14 erfolgt eine selbsttätige Ausschaltung der wenigstens einen Signaleinrichtung, wenn erkannt wird, daß hinter dem eigenen Kraftfahrzeug ein anderes Kraftfahrzeug angehalten hat.

In dieser Situation erweist es sich als vorteilhaft, die Signaleinrichtung abzuschalten, um im nachfolgenden stop-and-go Verkehr des Staus den Fahrzeugführer des hinterher fahrenden Kraftfahrzeuges nicht zu irritieren sondern dessen Wahrnehmung auf eventuelle Bremslichter zu lenken. Soweit wenigstens ein weiteres Kraftfahrzeug hinter dem eigenen Kraftfahrzeug angehalten hat, muß der Hinweis auf das Stauende mittels Einschalten von Signaleinrichtungen vorteilhaft durch das Kraftfahrzeug am Stauende realisiert werden.

Bei dem Verfahren nach Anspruch 15 erfolgt eine selbsttätige Ausschaltung der wenigstens einen Signaleinrichtung, wenn erkannt wird, daß das Kraftfahrzeug wieder anfährt.

Dadurch kann vorteilhaft abgeleitet werden, daß ein Stau sich auflöst, bzw. daß das Kraftfahrzeug nach einem Anhalten am Straßenrand wieder anfährt und somit kein Hindernis mehr darstellt. Die Signaleinrichtung kann dann vorteilhaft abgeschaltet werden.

Bei dem Verfahren nach Anspruch 16 erfolgt eine selbsttätige Ausschaltung der wenigstens einen Signaleinrichtung, wenn erkannt wird, daß das Kraftfahrzeug wieder angefahren ist und eine bestimmte Mindestgeschwindigkeit erreicht hat.

Im Unterschied zum Verfahren nach Anspruch 15 kann dabei beispielsweise die Signaleinrichtung erst dann abgeschaltet werden, wenn aufgrund der Geschwindigkeit des Kraftfahrzeugs geschlossen werden kann, daß sich der Stau aufgelöst hat.

Gegebenenfalls ist es möglich, den Wert der Mindestgeschwindigkeit anzupassen abhängig davon, auf welcher Straße sich das Kraftfahrzeug befindet Beispielsweise kann also der Wert der Mindestgeschwindigkeit auf einer Autobahn größer gewählt werden als auf einer Landstraße. Ebenso ist es möglich, den Wert der Mindestgeschwindigkeit an den allgemeinen Verkehrsfluß anzupassen. Dies kann erfolgen, indem die Durchschnittsgeschwindigkeit einer bestimmten Wegstrecke ermittelt wird. Diese Durchschnittsgeschwindigkeit wird beispielsweise ermittelt anhand der Daten der Fahrzeuggeschwindigkeit, die vor dem Stillstand des Fahrzeugs vorgelegen haben.

Bei einer anderen Lösung nach Anspruch 17 erfolgt eine selbsttätige Einschaltung von wenigstens einer Signaleinrichtung an einem Kraftfahrzeug bei einem eingelegten Rückwärtsgang.

Dadurch können vorteilhaft andere Verkehrsteilnehmer auf die geänderte Fahrtrichtung aufmerksam gemacht werden.

Bei dem Verfahren nach Anspruch 18 wird aufgrund einer Ortsbestimmung festgestellt, ob sich das Kraftfahrzeug im Ausfahrtsbereich einer Bundesstraße oder Autobahn befindet, wobei dann eine selbsttätige Ausschaltung der wenigstens einen Signaleinrichtung erfolgt bzw. deren selbsttätige Einschaltung blockiert wird.

Bei dem Verfahren nach Anspruch 19 wird aufgrund der Straßen- oder Verkehrsverhältnisse ermittelt, ob sich das Kraftfahrzeug in einem Staubereich befindet, wobei in diesem Fall eine selbsttätige Ausschaltung der wenigstens einen Signaleinrichtung erfolgt bzw. deren selbsttätige Einschaltung blockiert wird.

Bei dem Verfahren nach Anspruch 20 wird erkannt, ob das Kraftfahrzeug einen Spurwechsel oder einen Abbiegevorgang anzeigt, wobei in diesem Fall eine selbsttätige Ausschaltung der wenigstens einen Signaleinrichtung erfolgt bzw. deren selbsttätige Einschaltung blockiert wird.

Bei dem Verfahren nach Anspruch 21 wird erkannt, ob sich das Kraftfahrzeug auf einer Zufahrt zu einer Bundesstraße oder Autobahn befindet und auf diese Einbiegen will, wobei in diesem Fall eine selbsttätige Ausschaltung der wenigstens einen Signaleinrichtung erfolgt bzw. deren selbsttätige Einschaltung blockiert wird.

Bei dem Verfahren nach Anspruch 22 wird erkannt, ob sich das Fahrzeug in einem Kreuzungsbereich zum Abbiegen befindet oder ob das Kraftfahrzeug einen Überholvorgang eingeleitet hat, wobei in diesem Fall eine selbsttätige Ausschaltung der wenigstens einen Signaleinrichtung erfolgt bzw. deren selbsttätige Einschaltung blockiert wird.

Bei diesen Ansprüchen werden vorteilhaft Verkehrs- und/oder Straßensituationen daraufhin ausgewertet, ob eine Einschaltung einer Signaleinrichtung tatsächlich notwendig ist.

Gegebenenfalls kann eine selbsttätige Ausschaltung einer Signaleinrichtung und das Blockieren der Einschaltung entsprechend einem der vorgenannten Ansprüche auch so realisiert sein, daß ein selbsttätiges Ausschalten nur dann erfolgt, wenn die Signaleinrichtung vorher selbsttätig eingeschaltet wurde. Bei einem manuellen Einschalten durch den Fahrzeugführer würde dann also kein automatisches Abschalten erfolgen.

Als weiteres Kriterium für ein selbsttätiges Einschalten kann vorgesehen werden, daß nicht bereits vorher aufgrund derselben Kriterien eine selbsttätige Einschaltung erfolgt ist und der Fahrzeugführer die Signaleinrichtung daraufhin manuell ausgeschaltet hat. Dadurch können vorteilhaft nacheinander abfolgende selbsttätige Einschaltungen aufgrund einer Fehlinterpretation der Situation vermieden werden. Eine selbsttätige Einschaltung der Signaleinrichtung - aufgrund derselben oder auch anderer - Kriterien würde dann beispielsweise erst wieder erfolgen, wenn das Kraftfahrzeug zwischenzeitlich wieder einen Schwellwert der Geschwindigkeit überschritten hat oder wenn zwischenzeitlich die Brennkraftmaschine abgestellt worden ist. Daraus könnte dann geschlossen werden, daß die zur Beurteilung anstehende Situation mit der Situation, die offensichtlich falsch interpretiert worden ist, nichts mehr zu tun hat. In dem beschriebenen Beispiel könnte also erkannt werden, daß sich zwischenzeitlich der Verkehrsfluß geändert hatte.

Ein Ausführungsbeispiel der Erfindung ist in der Zeichnung dargestellt. Es zeigt dabei im einzelnen:
- Fig. 1:: ein erstes Ausführungsbeispiel eines Verfahrens zur selbsttätigen Einschaltung von wenigstens einer Signaleinrichtung,
- Fig. 2:: ein weiteres Ausführungsbeispiel eines Verfahrens zur selbsttätigen Einschaltung von wenigstens einer Signaleinrichtung,
- Fig. 3:: ein Ausführungsbeispiel eines Verfahrens zur selbsttätigen Ausschaltung von wenigstens einer Signaleinrichtung,
- Fig. 4:: einen Verfahrensablauf als Teil einer Ortsbestimmung,
- Fig. 5:: einen weiteren Verfahrensablauf als Teil einer Ortsbestimmung,
- Fig. 6:: einen weiteren Verfahrensablauf als Teil einer Ortsbestimmung,
- Fig. 7:: einen weiteren Verfahrensablauf als Teil einer Ortsbestimmung unter Berücksichtigung der Verkehrssituation,
- Fig. 8:: einen weiteren Verfahrensablauf unter Berücksichtigung der Verkehrssituation,
- Fig. 9:: einen weiteren Verfahrensablauf als Teil einer Ortsbestimmung unter Berücksichtigung der Verkehrssituation und
- Fig. 10:: einen weiteren Verfahrensablauf als Teil einer Ortsbestimmung unter Berücksichtigung der Verkehrssituation.

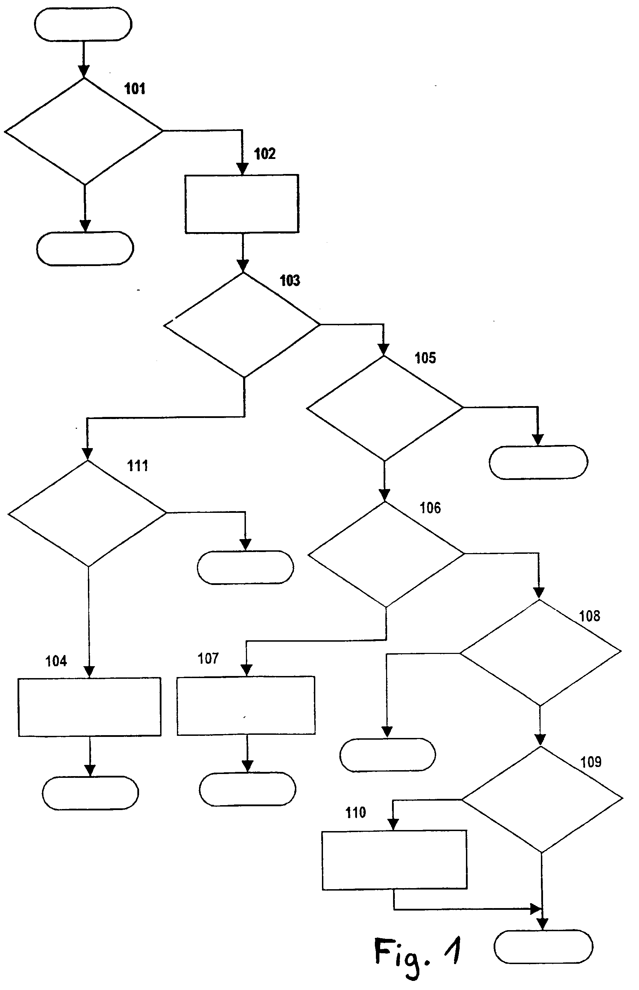

Gemäß dem Ausführungsbeispiel von Figur 1 wird in dem Schritt 101 zunächst geprüft, ob das Kraftfahrzeug von dem Fahrzeugführer gewollt abgestellt wurde. Diese Prüfung kann beispielsweise erfolgen, indem geprüft wird, ob die Zündung ausgeschaltet wurde, der Zündschlüssel abgezogen wurde und/oder das Kraftfahrzeug von außen verriegelt wurde.

Wenn eines oder mehrere dieser Kriterien erfüllt ist, kann geschlossen werden, daß der Fahrzeugführer das Kraftfahrzeug - beispielsweise auf einem Waldparkplatz geparkt hat. Der Durchlauf des Verfahrens wird dann beendet.

Andernfalls kann geschlossen werden, daß das Kraftfahrzeug nicht vom Fahrzeugführer gewollt abgestellt wurde. Es erfolgt dann ein Übergang zu dem Schritt 102, in dem eine Ortsbestimmung erfolgt. Eine solche Ortsbestimmung kann beispielsweise erfolgen, indem bei einem Kraftfahrzeug auf das Navigationssystem mit digitaler Straßenkarte und das damit verbundene GPS zurückgegriffen wird. Mit dieser Ortsbestimmung kann insbesondere festgestellt werden, ob sich das Kraftfahrzeug innerhalb oder außerhalb einer geschlossenen Ortschaft befindet. Es kann auch unterschieden werden, ob sich das Kraftfahrzeug auf einer Autobahn befindet. Abhängig von der Ortsbestimmung kann beispielsweise ein Wert einer Mindestgeschwindigkeit bestimmt werden, unterhalb der ein selbsttätiges Einschalten einer Signaleinrichtung in Frage kommt. Beispielsweise wird diese Mindestgeschwindigkeit auf einer Autobahn größer festzulegen sein als auf einer Bundesstraße. Es versteht sich dabei, daß nachfolgend das Kriterium 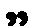 das Kraftfahrzeug befindet sich auf einer Autobahn bzw. auf einer größeren Bundesstraße" dominant ist gegenüber dem Kriterium, daß sich das Kraftfahrzeug innerhalb einer geschlossenen Ortschaft befindet. Weil die 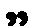 geschlossene Ortschaft" nur grob gebietsweise festgemacht werden kann, kann es vorkommen, daß sich das Kraftfahrzeug auf einer Autobahn befindet, obwohl gleichzeitig festgestellt worden ist, daß sich das Kraftfahrzeug innerhalb einer geschlossenen Ortschaft befindet. Dies kann daran liegen, daß die Autobahn innerhalb des Stadtgebiets verläuft. Für die nachfolgende Auswertung ist die Bestimmung des 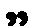 Straßentyps" daher vorrangig. Vorteilhaft ist diese Ortsbestimmung noch kombiniert mit einer Erkennung der Fahrspur, um beispielsweise erkennen zu können, ob sich das Fahrzeug auf einer Standspur oder einer Ausfahrtspur oder einer Abbiegespur befindet.

Im Schritt 103 wird überprüft, ob das Kraftfahrzeug auf einer Standspur einer Autobahn oder einer entsprechend ausgebauten Bundesstraße fährt oder steht.

Ist dies der Fall, erfolgt ein Übergang zu dem Schritt 111, in dem beispielsweise geprüft werden kann, ob das Fahrzeug eine bestimmte Mindeststrecke auf der Standspur zurückgelegt hat. Dies ist sinnvoll, um zu berücksichtigen, daß das Kraftfahrzeug eventuell wegen einer geänderten Verkehrsführung, beispielsweise infolge einer Baustelle, auf der Standspur fährt. Ebenso kann in dem Schritt 111 alternativ oder zusätzlich geprüft werden, ob das Fahrzeug steht oder mit einer Geschwindigkeit fährt, die kleiner ist als eine Mindestgeschwindigkeit, die typischerweise einer Situation entspricht, bei der das Fahrzeug aufgrund einer veränderten Verkehrsführung im normalen Fahrbetrieb auf der Standspur fährt.

Wenn dies nicht der Fall ist, kann geschlossen werden, daß keine Notwendigkeit besteht, die Signaleinrichtung einzuschalten. Der Durchlauf des Verfahrens ist dann beendet.

Ist dies der Fall, erfolgt in dem Schritt 104 eine selbsttätige Einschaltung der Signaleinrichtung, da geschlossen werden kann, daß das Fahrzeug eine Panne hat.

Wenn die Prüfung in dem Schritt 103 verneint wurde, erfolgt dort ein Übergang zu dem Schritt 105, in dem überprüft wird, ob das Kraftfahrzeug steht oder sich mit einer Geschwindigkeit bewegt, die geringer ist als die im Schritt 102 bestimmte Mindestgeschwindigkeit.

Ist dies nicht der Fall, ist der Durchlauf des Verfahrens beendet.

Andernfalls erfolgt ein Übergang zu dem Schritt 106, in dem geprüft wird, ob sich das Kraftfahrzeug im Bereich einer Haltestelle eines öffentlichen Verkehrsmittels befindet. Dies kann beispielsweise durch eine Sendeeinrichtung an der Haltestelle und eine entsprechende Empfangseinrichtung im Kraftfahrzeug erkannt werden, die ein Signal von der Sendeeinrichtung der Haltestelle empfangen kann. Ebenso kann dies auch wiederum unter Verwendung des GPS mit Navigationssystem und digitaler Straßenkarte ausgewertet werden, indem in dem Kartensystem die öffentlichen Verkehrsmittel eingetragen sind. Alternativ oder zusätzlich kann geprüft werden, ob die Türen des Fahrzeugs geöffnet sind oder zum Öffnen freigegeben sind.

Ist dies der Fall, erfolgt in dem Schritt 107 eine Aktivierung der Signaleinrichtung.

Andernfalls erfolgt ein Übergang zu dem Schritt 108, in dem geprüft wird, ob sich das Kraftfahrzeug außerhalb einer geschlossenen Ortschaft bzw. auf einer entsprechenden Straße wie beispielsweise einer Autobahn oder einer entsprechend ausgebauten Bundesstraße (4- oder mehrspurig) befindet.

Ist dies nicht der Fall, ist der Durchlauf des Verfahrens beendet.

Andernfalls erfolgt ein Übergang zu dem Schritt 109, in dem geprüft wird, ob sich das Kraftfahrzeug im Bereich einer Kreuzung befindet.

Ist dies der Fall, ist der Durchlauf des Verfahrens beendet.

Andernfalls erfolgt ein Übergang zu dem Schritt 110, in dem eine Einschaltung der Signaleinrichtung erfolgt.

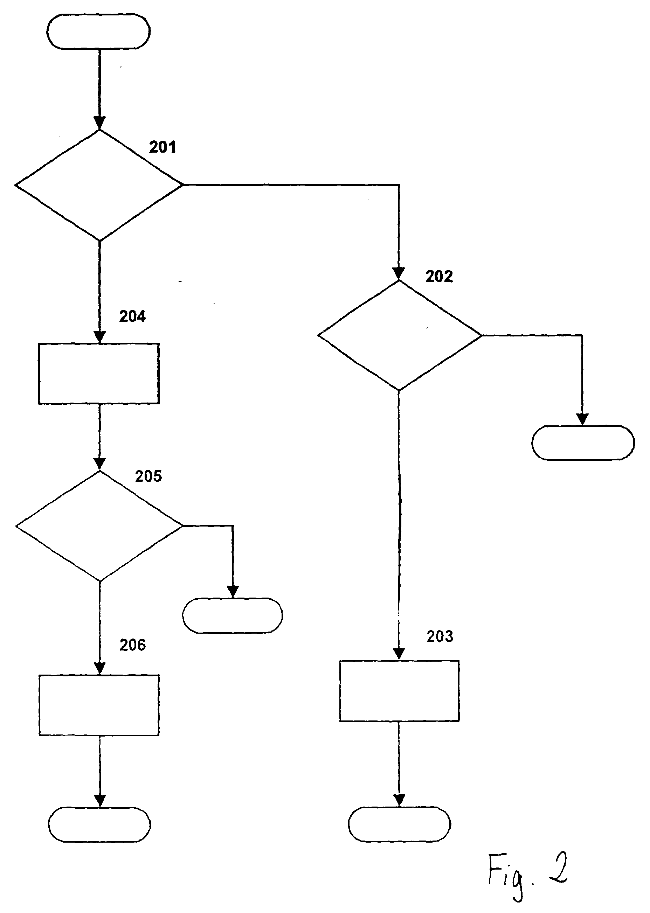

Figur 2 zeigt ein weiteres Beispiel eines Verfahrens. Dabei erfolgt in dem Schritt 201 eine Überprüfung, ob das Kraftfahrzeug bremst. Gegebenenfalls kann auch eine Prüfung dahingehend erfolgen, daß das Kraftfahrzeug bremst mit einer Sollverzögerung, die oberhalb eines bestimmten Schwellwertes liegt.

Ist dies nicht der Fall, erfolgt ein Übergang zu dem Schritt 202, in dem geprüft wird, ob der Rückwärtsgang eingelegt ist. Ggf. kann in diesem Schritt weiterhin überprüft werden, ob sich das Fahrzeug außerhalb einer geschlossenen Ortschaft befindet. Dadurch kann weiterhin vermieden werden, daß beispielsweise bei einem normalen Einparkvorgang innerhalb geschlossener Ortschaften die Warnblinkanlage eingeschaltet wird.

Wenn dies der Fall ist, erfolgt in dem Schritt 203 eine Einschaltung der Signaleinrichtung.

Andernfalls ist der Durchlauf des Verfahrens beendet.

Ergab die Prüfung im Schritt 201, daß das Kraftfahrzeug bremst, erfolgt ein Übergang zu dem Schritt 204, in dem eine Messung von Relativgeschwindigkeiten sowie Verzögerungen insbesondere zu solchen Kraftfahrzeugen durchgeführt wird, die sich hinter dem eigenen Kraftfahrzeug befinden.

Im Schritt 205 wird dann überprüft, ob aufgrund der Messung im Schrift 204 zu erwarten ist, daß eine Kollision stattfinden könnte.

In diesem Fall erfolgt ein Übergang zu dem Schritt 206, in dem eine selbsttätige Einschaltung der Signaleinrichtung erfolgt.

Andernfalls wird der Durchlauf des Verfahrens beendet.

Die selbsttätige Einschaltung kann auch nur in Abhängigkeit der Schritte 202 und 203 erfolgen. In diesem Fall ist es also insbesondere nicht notwendig, daß das Fahrzeug bremst.

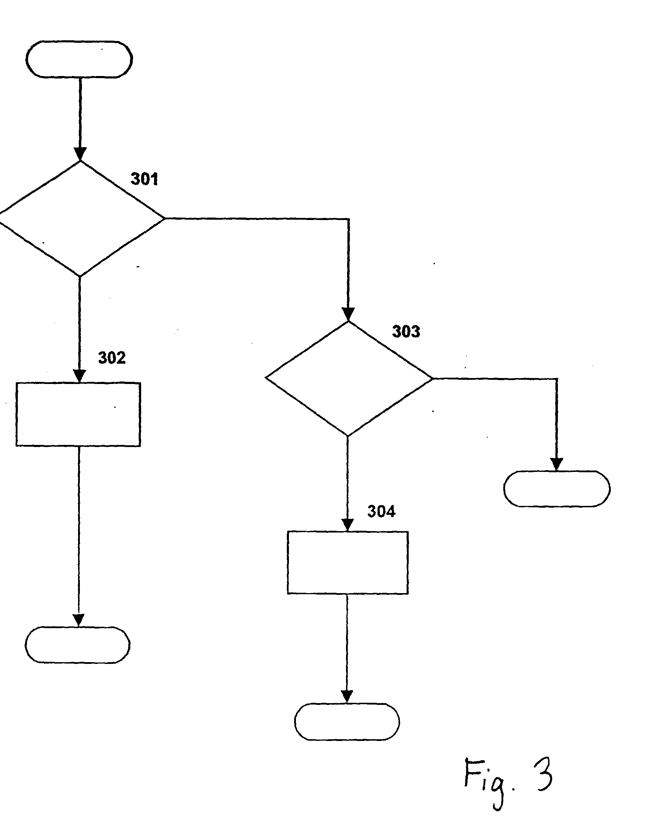

Figur 3 zeigt einen Ablauf des Verfahrens, nach dem festgestellt werden kann, ob die Signaleinrichtung selbsttätig ausgeschaltet wird. Diese selbsttätige Ausschaltung kann beispielsweise auf die Fälle beschränkt bleiben, bei denen zuvor eine selbsttätige Einschaltung erfolgt ist.

Gemäß dem Schritt 301 wird zunächst überprüft, ob hinter dem eigenen Kraftfahrzeug ein anderes Kraftfahrzeug angehalten hat, anhält oder einen Haltevorgang eingeleitet hat.

In diesem Fall erfolgt ein Übergang zu dem Schritt 302, in dem ein selbsttätiges Ausschalten der Signaleinrichtung erfolgt.

Andernfalls erfolgt ein Übergang zu dem Schritt 303. In diesem Schritt 303 wird überprüft, ob das eigene Kraftfahrzeug wieder angefahren ist bzw. nach einem Wiederanfahren eine bestimmte Mindestgeschwindigkeit erreicht hat. Diese Mindestgeschwindigkeit kann beispielsweise wiederum abhängig vom Straßentyp (Autobahn, Bundesstraße) bestimmt werden.

Ist dies der Fall, erfolgt ein Übergang zu dem Schritt 304, in dem eine selbsttätige Ausschaltung der Signaleinrichtung erfolgt.

Andernfalls wird der Durchlauf des Verfahrens beendet.

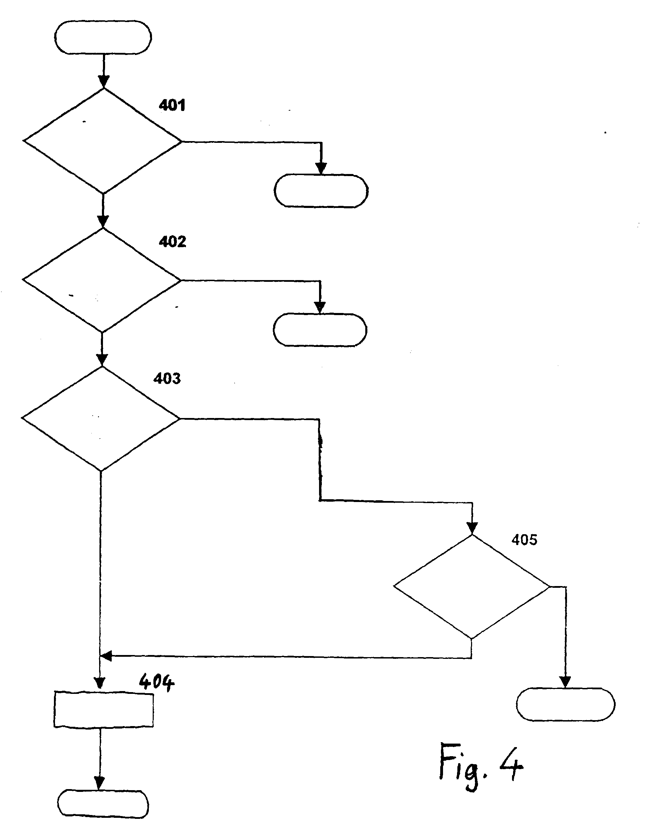

Figur 4 zeigt einen Teil eines Verfahrensablaufes, der beispielsweise in den Schritt 102 der Figur 1 integriert sein kann und der die Erkennung einer Fahrspur betrifft, auf der sich das Fahrzeug gerade befindet.

In dem Schritt 401 wird dabei überprüft, ob sich das Fahrzeug auf einer Autobahn oder einer Bundesstraße befindet. Dies kann beispielsweise durch Auswertung des Signals des GPS mit Navigationssystem und digitaler Straßenkarte geschehen.

Wenn dies erkannt wurde, erfolgt ein Übergang zu dem Schritt 402, in dem überprüft wird, ob das Fahrzeug die rechte Straßenbegrenzungslinie überfahren hat.

Ist dies der Fall, erfolgt ein Übergang zu dem Schritt 403, in dem überprüft wird, ob eine durchgezogene Linie rechts und links vom Fahrzeug erkannt wird.

In diesem Fall kann geschlossen werden, daß sich das Fahrzeug auf der Standspur befindet, weswegen dann im Schritt 404 eine entsprechende Kennung gesetzt wird.

Falls dies nicht der Fall ist, erfolgt ein Übergang zu Schritt 405, in dem überprüft wird, ob der Abstand zum rechten Fahrbahnrand kleiner ist als ein bestimmter Minmalwert. Daraus kann ebenfalls geschlossen werden, daß sich das Fahrzeug auf dem Standstreifen bzw. der Standspur befindet, weswegen dann wieder ein Übergang zu Schritt 404 erfolgt.

Wenn der Durchlauf des Verfahrens der Figur 4 beendet wird, weil eine der Abfragen verneint wurde, wird die bei einem vorherigen Durchlauf des Verfahrens gegebenenfalls gesetzte Kennung (Schritt 404) wieder zurückgesetzt.

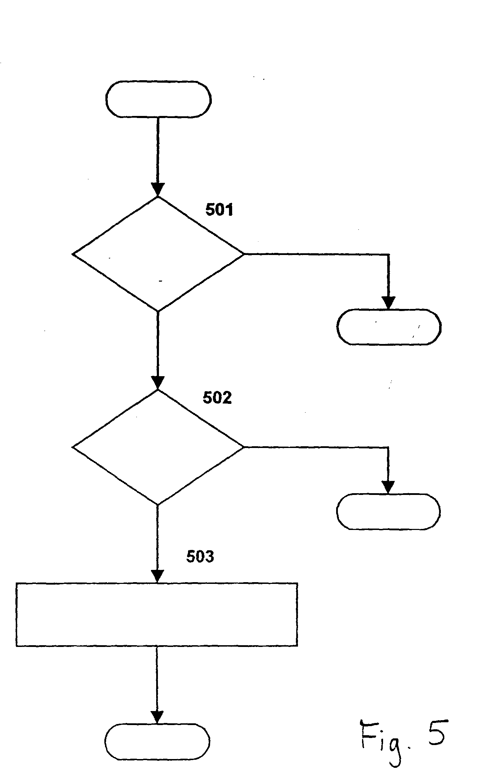

Figur 5 zeigt einen weiteren Teil eines Verfahrensablaufes zur Ortsbestimmung, um daraus Kriterien für die Notwendigkeit einer Einschaltung einer Signaleinrichtung abzuleiten.

Wenn festgestellt wurde, daß sich das Fahrzeug auf einer Autobahn oder einer Bundesstraße befindet, wird in dem Schritt 501 überprüft, ob sich das Fahrzeug weniger als einen bestimmten Mindestabstand von einer Ausfahrt entfernt befindet.

Ist dies der Fall. erfolgt ein Übergang zu dem Schritt 502, in dem überprüft wird, ob die Ausfahrtslinie überfahren wurde.

Ist dies der Fall, erfolgt ein Übergang zu dem Schritt 503, in dem ggf. die Signaleinrichtung abgeschaltet wird, wenn diese vorher eingeschaltet war. Weiterhin wird eine entsprechende Kennung gesetzt.

Wenn der Durchlauf des Verfahrens nach Figur 5 beendet wird, weil eine der Abfragen verneint wurde, wird die ggf. bei einem vorhergehenden Verfahrensdurchlauf im Schritt 503 gesetzte Kennung zurückgesetzt.

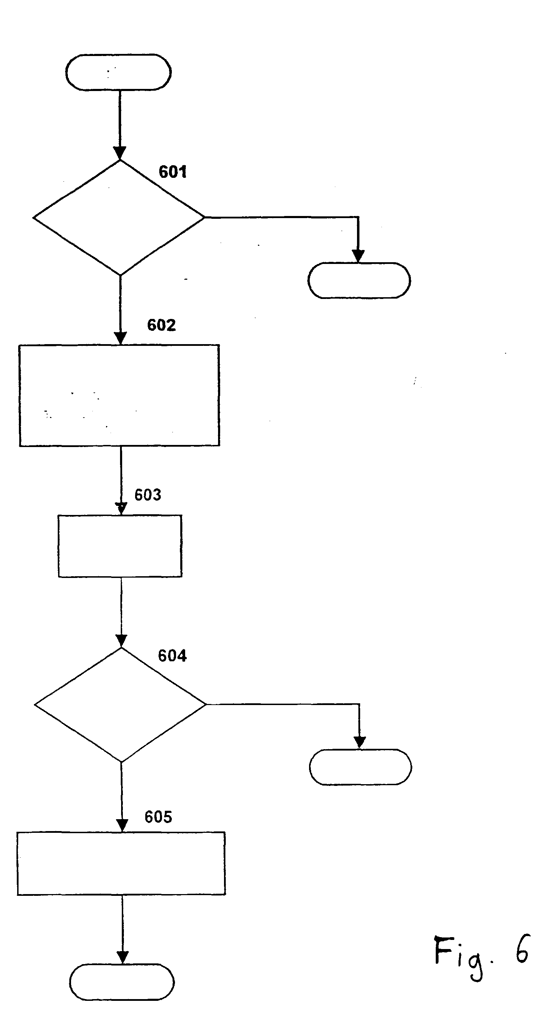

Entsprechend der Darstellung der Figur 6 erfolgt in dem Schritt 601 eine Prüfung, ob das Fahrzeug auf einer Bundesstraße oder einer Landstraße fährt.

Ist dies der Fall, wird in dem Schritt 602 weiterhin der momentane Verkehrsfluß, die Straßenart und/oder der Straßenzustand ermittelt. Weiterhin kann eine Bestimmung erfolgen, ob eine Ausfahrt oder eine Raststätte bzw. ein Parkplatz in der Nähe ist, d.h. in Fahrtrichtung voraus ist. Weiterhin kann bestimmt werden, ob eine Kreuzung in Fahrtrichtung voraus ist. Alternativ und/oder zusätzlich können beispielsweise anhand der Erkennung von Fahrspuren und/oder Verkehrszeichen Ausfahrten oder Kreuzungsbereiche erkannt werden.

Es erfolgt dann ein Übergang zu dem Schritt 603, in dem eine Rückstaustrecke s bestimmt wird anhand der im Schritt 602 ermittelten Informationen.

Im Schritt 604 wird darin geprüft, ob sich das Fahrzeug in diesem Rückstaubereich s befindet.

Ist dies der Fall, wird in dem Schritt 605 eine Kennung gesetzt, aufgrund der eine automatische Einschaltung der Signaleinrichtung verhindert wird.

Wenn beim Durchlauf des Verfahrens nach Figur 6 eine der Abfragen 601 oder 604 verneint wurde, wird diese Kennung wieder zurückgesetzt, soweit diese bei einem vorhergehenden Durchlauf des Verfahrens nach Figur 6 gesetzt wurde.

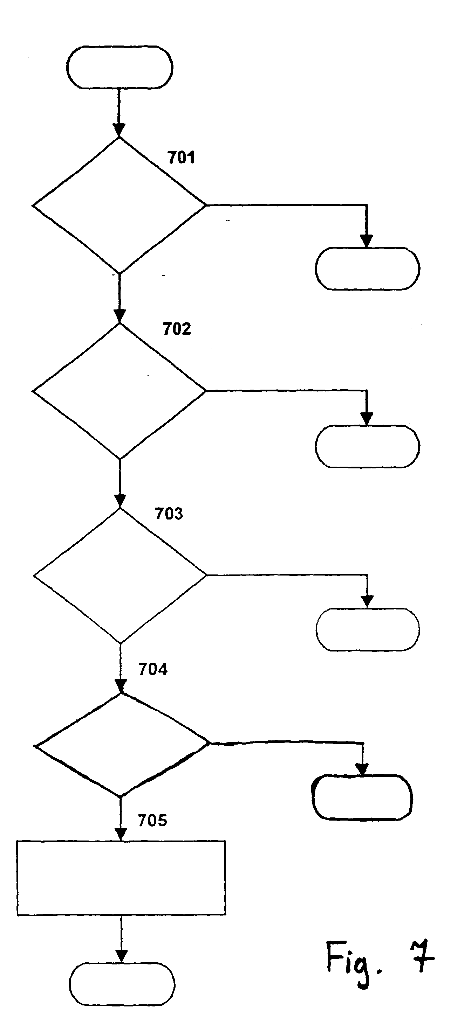

Gemäß der Darstellung der Figur 7 wird in dem Schritt 701 geprüft, ob der Fahrtrichtungsanzeiger der rechten Seite gesetzt wurde.

Ist dies der Fall, erfolgt ein Übergang zu dem Schritt 702, in dem geprüft wird, ob sich das Fahrzeug außerhalb einer geschlossenen Ortschaft befindet.

Ist dies der Fall, erfolgt ein Übergang zu dem Schritt 703, in dem geprüft wird, ob sich das Fahrzeug innerhalb eines bestimmten Abstandes zu einer Ausfahrt bzw. zu einer Kreuzung befindet.

Ist dies der Fall, erfolgt ein Übergang zu dem Schritt 704, in dem aus der Fahrzeugverzögerung und dem Verkehrsfluß die Absicht überprüft wird, abzubiegen oder auszufahren.

Wenn in dem Schritt 704 diese Absicht erkannt wurde, erfolgt ein Übergang zu dem Schritt 705, in dem eine Kennung gesetzt wird, aufgrund der die automatische Einschaltung der Signaleinrichtung unterdrückt wird.

Wenn der Durchlauf des Verfahrens nach Figur 7 beendet wird, weil eine der Abfragen verneint wurde, wird die im Schritt 705 bei einem früheren Durchlauf des Verfahrens ggf. gesetzte Kennung zurückgesetzt.

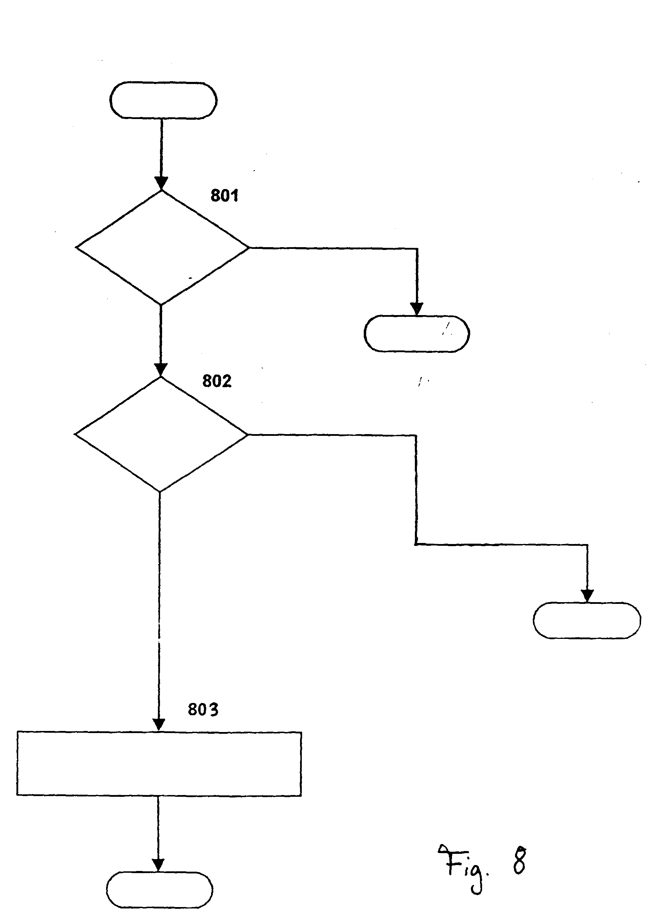

Entsprechend der Darstellung der Figur 8 wird bei einem Durchlauf dieses Verfahrens im Schritt 801 geprüft, ob der Fahrtrichtungsanzeiger der linken oder der rechten Seite gesetzt wurde.

Ist dies der Fall, wird in dem Schritt 802 geprüft, ob die Fahrzeuggeschwindigkeit größer ist als ein bestimmter Schwellwert und/oder ob die Fahrzeugbeschleunigung größer ist als ein bestimmter Schwellwert.

Ist dies der Fall, erfolgt ein Übergang zu dem Schritt 803, in dem die Signaleinrichtung ausgeschaltet wird, wenn diese eingeschaltet war.

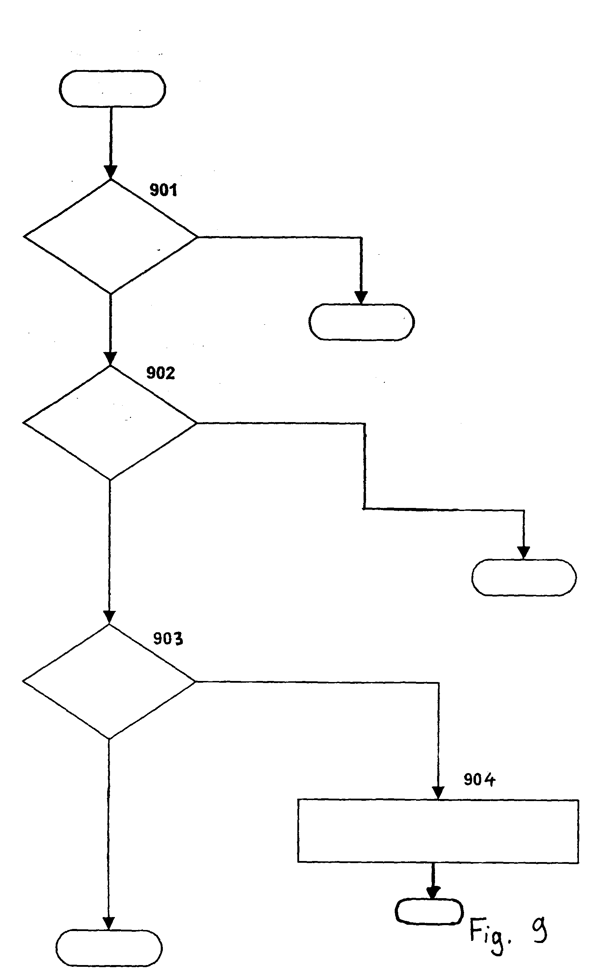

Entsprechend der Darstellung der Figur 9 wird in dem Schritt 901 geprüft, ob sich das Fahrzeug auf einer Zufahrt zu einer Autobahn oder einer Bundesstraße befindet.

Ist dies der Fall, wird in dem Schritt 902 geprüft, ob der Fahrtrichtungsanzeiger der linken Seite betätigt wurde und/oder ob die Beschleunigung des Fahrzeugs größer ist als ein bestimmter Schwellwert.

Ist dies der Fall, erfolgt ein Übergang zu dem Schritt 903, in dem geprüft wird, ob die Einfahrtslinie auf der linken Seite überfahren wurde.

Wenn dies nicht der Fall ist, wird die Signaleinrichtung entsprechend dem Schritt 904 zumindest dann ausgeschaltet, wenn diese vorher selbsttätig eingeschaltet wurde.

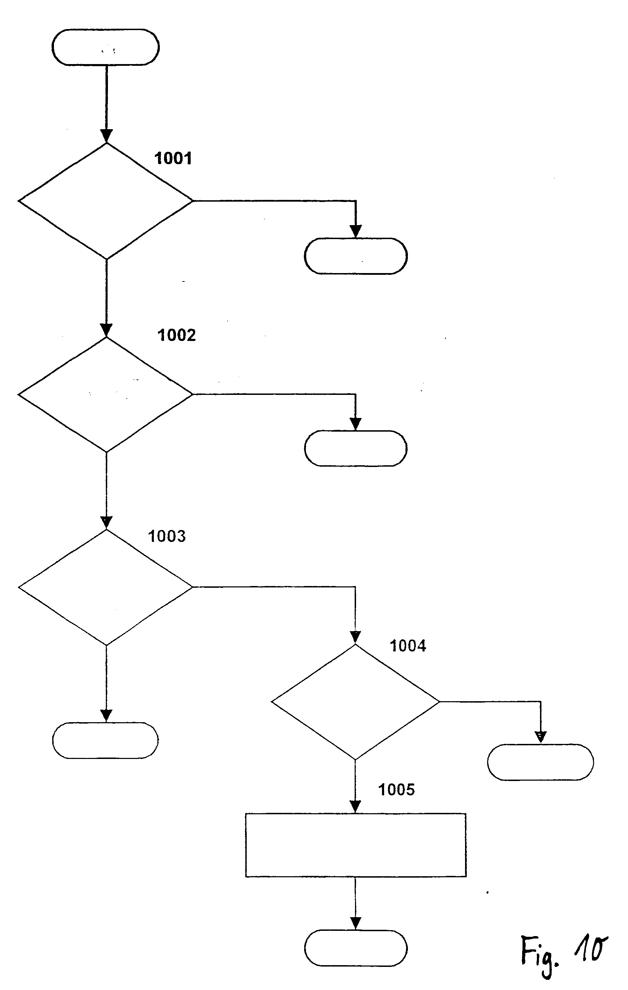

Entsprechend der Darstellung der Figur 10 wird in dem Schritt 1001 geprüft, ob das Fahrzeug den Fahrtrichtungsanzeiger der linken Fahrzeugseite gesetzt hat.

Ist dies der Fall, erfolgt ein Übergang zu dem Schritt 1002, in dem geprüft wird, ob sich das Fahrzeug außerhalb einer geschlossenen Ortschaft, insbesondere auf einer Bundesstraße oder Autobahn befindet.

Ist dies der Fall wird in dem Schritt 1003 überprüft, ob sich das Fahrzeug innerhalb eines bestimmten Abstandes vor einer Kreuzung befindet.

Ist dies der Fall, wird geschlossen, daß es sich um ein normales Abbiegen handelt Der Durchlauf des Verfahrens wird dann beendet, ohne daß eine Einschaltung der Signaleinrichtung erfolgt. Es kann eine Kennung gesetzt werden, aufgrund der eine selbsttätige Einschaltung der Signaleinrichtung verhindert wird.

Andernfalls erfolgt ein Übergang zu dem Schritt 1004, in dem geprüft wird, ob die Fahrzeuggeschwindigkeit kleiner ist als eine untere Schwelle.

Ist dies der Fall, erfolgt ein Übergang zu dem Schritt 1005, in dem die Signaleinrichtung eingeschaltet wird. Gegebenfalls wird hier die in einem der vorhergehenden Verfahrensdurchläufe gesetzte Kennung wieder zurückgesetzt.

Ist die Geschwindigkeit größer als die untere Schwelle, wird der Durchlauf des Verfahrens beendet. Es kann dann geschlossen werden, daß es sich um einen Überholvorgang handelt. Gegebenenfalls kann auch hier wieder eine Kennung gesetzt werden, aufgrund der eine selbsttätige Einschaltung der Signaleinrichtung verhindert wird.

Vorteilhaft wird bei den Verfahren nach den Figuren 1 und 2 vor dem Einschalten der Signaleinrichtung geprüft, ob nicht eine der Kennungen gesetzt ist, die in den Schritten 503, 605 und/oder 705 gegebenenfalls gesetzt wurde.

## Patentansprüche

1. Verfahren zur selbsttätigen Schaltung (104, 107, 110, 203) von Signaleinrichtungen an einem Kraftfahrzeug,
dadurch gekennzeichnet, daß bei stehendem bzw. sich mit einer Geschwindigkeit kleiner als eine Mindestgeschwindigkeit fortbewegenden Kraftfahrzeug (105) zumindest abhängig von einer Ortsbestimmung (102) des Kraftfahrzeugs eine selbsttätige Einschaltung (104, 107, 110, 203) wenigstens einer Signaleinrichtung erfolgt.

2. Verfahren nach Anspruch 1,
dadurch gekennzeichnet, daß eine selbsttätige Einschaltung (110) erfolgt, wenn sich aufgrund der Ortsbestimmung (102) ergibt, daß sich das Kraftfahrzeug auf einer Autobahn befindet (108).

3. Verfahren nach Anspruch 1 oder 2,
dadurch gekennzeichnet, daß eine selbsttätige Einschaltung (110) erfolgt, wenn sich aufgrund der Ortsbestimmung (102) ergibt, daß sich das Kraftfahrzeug außerhalb einer geschlossenen Ortschaft befindet (108).

4. Verfahren nach Anspruch 3,
dadurch gekennzeichnet, daß eine selbsttätige Einschaltung (110) nur dann erfolgt, wenn sich aufgrund der Ortsbestimmung (102) ergibt, daß sich das Kraftfahrzeug auf einer 4- oder mehrspurigen Straße befindet (108).

5. Verfahren nach Anspruch 3 oder 4,
dadurch gekennzeichnet, daß eine selbsttätige Einschaltung (110) nur dann erfolgt, wenn sich aufgrund der Ortsbestimmung (102) ergibt, daß sich das Kraftfahrzeug nicht im Bereich einer Kreuzung befindet (109).

6. Verfahren nach einem der Ansprüche 1 bis 5,
dadurch gekennzeichnet, daß eine selbsttätige Einschaltung (107) erfolgt, wenn erkannt wird, daß sich das Kraftfahrzeug im Bereich einer Haltestelle eines öffentlichen Verkehrsmittels befindet (106).

7. Verfahren nach einem der Ansprüche 1 bis 6,
dadurch gekennzeichnet, daß eine selbsttätige Einschaltung (104) erfolgt, wenn erkannt wird, daß das Kraftfahrzeug auf einer Standspur fährt oder steht (103).

8. Verfahren nach einem der Ansprüche 1 bis 7,
dadurch gekennzeichnet, daß eine selbsttätige Einschaltung (104, 107, 110) bzw. ein fortdauernder Betrieb nach einer erfolgten selbsttätigen Einschaltung (104, 107, 110) nur dann erfolgt, wenn keines der folgenden Kriterien (101) erkannt wurde:
• die Zündung wurde abgestellt,
• der Zündschlüssel wurde aus dem Zündschloß abgezogen und/oder
• das Kraftfahrzeug wurde von außen verriegelt.

9. Verfahren nach einem der Ansprüche 1 bis 8,
dadurch gekennzeichnet, daß eine selbsttätige Einschaltung erfolgt (203), wenn der Rückwärtsgang eingelegt wird (202).

10. Verfahren zur selbsttätigen Schaltung (206) von Signaleinrichtungen an einem Kraftfahrzeug,
dadurch gekennzeichnet, daß eine selbsttätige Einschaltung (206) wenigstens einer Signaleinrichtung zumindest abhängig davon erfolgt, daß erkannt wird, daß sich ein Kraftfahrzeug annähert, aufgrund dessen Fahrweise geschlossen wird, daß es zu einer Kollision kommen kann (204, 205).

11. Verfahren nach Anspruch 10,
dadurch gekennzeichnet, daß ein Kriterium zur Beurteilung der Fahrweise des sich annähernden Kraftfahrzeugs dessen Verzögerung, die relative Verzögerung zwischen den Fahrzeugen und/oder deren Relativgeschwindigkeit ist (204, 205).

12. Verfahren nach Anspruch 10 oder 11,
dadurch gekennzeichnet, daß eine selbsttätige Einschaltung (206) der wenigstens einen Signaleinrichtung nur dann erfolgt, wenn das eigene Kraftfahrzeug bremst (201).

13. Verfahren nach Anspruch 11,
dadurch gekennzeichnet, daß eine selbsttätige Einschaltung (206) der wenigstens einen Signaleinrichtung nur dann erfolgt, wenn das eigene Kraftfahrzeug mit einer Sollverzögerung oberhalb eines bestimmten Schwellwertes bremst (201).

14. Verfahren zur selbsttätigen Schaltung von Signaleinrichtungen an einem Kraftfahrzeug, insbesondere nach einem der Ansprüche 1 bis 13,
dadurch gekennzeichnet, daß eine selbsttätige Ausschaltung (302) der wenigstens einen Signaleinrichtung erfolgt, wenn erkannt wird, daß hinter dem eigenen Kraftfahrzeug ein anderes Kraftfahrzeug angehalten hat, anhält oder einen Haltevorgang eingeleitet hat (301).

15. Verfahren zur selbsttätigen Schaltung von Signaleinrichtungen an einem Kraftfahrzeug, insbesondere nach einem der Ansprüche 1 bis 14,
dadurch gekennzeichnet, daß eine selbsttätige Ausschaltung (304) der wenigstens einen Signaleinrichtung erfolgt, wenn erkannt wird, daß das Kraftfahrzeug wieder anfährt (303).

16. Verfahren nach Anspruch 15,
dadurch gekennzeichnet, daß eine selbsttätige Ausschaltung (304) der wenigstens einen Signaleinrichtung erfolgt, wenn erkannt wird, daß das Kraftfahrzeug wieder angefahren ist und eine bestimmte Mindestgeschwindigkeit erreicht hat (303).

17. Verfahren zur selbsttätigen Schaltung (203) von Signaleinrichtungen an einem Kraftfahrzeug,
dadurch gekennzeichnet, daß bei einem eingelegten Rückwärtsgang eine selbsttätige Einschaltung (203) wenigstens einer Signaleinrichtung erfolgt (202).

18. Verfahren nach einem der Ansprüche 1 bis 16,
dadurch gekennzeichnet, daß aufgrund einer Ortsbestimmung (501, 502) festgestellt wird, ob sich das Kraftfahrzeug im Ausfahrtsbereich einer Bundesstraße oder Autobahn befindet, wobei dann eine selbsttätige Ausschaltung (503) der wenigstens einen Signaleinrichtung erfolgt bzw. deren selbsttätige Einschaltung blockiert wird.

19. Verfahren nach einem der Ansprüche 1 bis 16 oder 18,
dadurch gekennzeichnet, daß aufgrund der Straßen- oder Verkehrsverhältnisse ermittelt wird, ob sich das Kraftfahrzeug in einem Staubereich befindet, wobei in diesem Fall eine selbsttätige Ausschaltung (605) der wenigstens einen Signaleinrichtung erfolgt bzw. deren selbsttätige Einschaltung blockiert wird.

20. Verfahren nach einem der Ansprüche 1 bis 16 oder 18 oder 19,
dadurch gekennzeichnet, daß erkannt wird, ob das Kraftfahrzeug einen Spurwechsel oder einen Abbiegevorgang anzeigt (701, 704), wobei in diesem Fall eine selbsttätige Ausschaltung (705) der wenigstens einen Signaleinrichtung erfolgt bzw. deren selbsttätige Einschaltung blockiert wird.

21. Verfahren nach einem der Ansprüche 1 bis 16 oder 18 bis 20,
dadurch gekennzeichnet, daß erkannt wird, ob sich das Kraftfahrzeug auf einer Zufahrt zu einer Bundesstraße oder Autobahn befindet und auf diese Einbiegen will (901, 902, 903), wobei in diesem Fall eine selbsttätige Ausschaltung (904) der wenigstens einen Signaleinrichtung erfolgt bzw. deren selbsttätige Einschaltung blockiert wird.

22. Verfahren nach einem der Ansprüche 1 bis 16 oder 18 bis 21,
dadurch gekennzeichnet, daß erkannt wird, ob sich das Fahrzeug in einem Kreuzungsbereich zum Abbiegen befindet (1001, 1002, 1003) oder ob das Kraftfahrzeug einen Überholvorgang eingeleitet hat (1004), wobei in diesem Fall eine selbsttätige Ausschaltung der wenigstens einen Signaleinrichtung erfolgt bzw. deren selbsttätige Einschaltung blockiert wird.
